# EUROPEAN PATENT SPECIFICATION

(11) **EP 1 039 962 B1**
(45) Date of publication and mention of the grant of the patent: **25.09.2002**
(21) Application number: 98959042.7
(22) Date of filing: 10.12.1998
(51) Int. Cl.: B01D 53/32, B01J 19/08

(54) **PLASMA ASSISTED GAS PROCESSING WITH ZIRCONIA**
ZIKONIUMOXID ENTHALTENDE VORRICHTUNG ZUR PLASMAGESTÜTZTEN GASBEHANDLUNG
TRAITEMENT DE GAZ PAR PLASMA EN PRESENCE D'OXYDE DE ZIRCONIUM

(30) Priority: 19.12.1997 GB 9726713
(43) Date of publication of application: 04.10.2000
(73) Proprietor: Accentus plc, Didcot, Oxfordshire OX11 0QJ (GB)
(72) Inventor: HALL, Stephen, Ivor, Oxford, Oxfordshire OX8 8AW (GB); MARTIN, Anthony, Robert, Abingdon, Oxfordshire OX14 3TF (GB); SEGAL, David, Leslie, Abingdon, Oxfordshire OX14 3AB (GB); SHAWCROSS, James, Timothy, Charlbury, Oxfordshire OX7 3TN (GB)
(74) Representative: Lofting, Marcus John
(86) International application number: GB9803704
(87) International publication number: WO99032213

(56) References cited:
- WO-A-98/00221
- US-A- 3 983 021
- US-A- 4 954 320
- US-A- 5 147 516
- US-A- 5 322 821

## Description

The present invention relates to the purification of gases, and in particular to the reduction of the emission of carbonaceous and nitrogenous combustion products from the exhausts of internal combustion engines.

One of the major problems associated with the development and use of internal combustion engines is the noxious exhaust emissions from such engines. Two of the most deleterious materials, particularly in the case of diesel engines, are particulate matter (primarily carbon) and oxides of nitrogen (NOₓ). Increasingly severe emission control regulations are forcing internal combustion engine and vehicle manufacturers to find more efficient ways of removing these materials in particular from internal combustion engine exhaust emissions. Unfortunately, in practice, it is found that techniques which improve the situation in relation to one of the above components of internal combustion engine exhaust emissions tend to worsen the situation in relation to the other. Even so, a variety of systems for trapping particulate emissions from internal combustion engine exhausts have been investigated, particularly in relation to making such particulate emission traps capable of being regenerated when they have become saturated with particulate material.

Examples of such diesel exhaust particulate filters are to be found in European patent application EP 0 010 384; US patents 4,505,107; 4,485,622; 4,427,418; and 4,276,066; EP 0 244 061; EP 0 112 634 and EP 0 132 166.

In all the above cases, the particulate matter is removed from diesel exhaust gases by a simple physical trapping of particulate matter in the interstices of a porous, usually ceramic, filter body, which is then regenerated by heating the filter body to a temperature at which the trapped diesel exhaust particulates are burnt off. In most cases the filter body is monolithic, although EP 0 010 384 does mention the use of ceramic beads, wire meshes or metal screens as well. US patent 4,427,418 discloses the use of ceramic coated wire or ceramic fibres.

GB patent 2,274,3412 discloses a method and apparatus for removing particulate and other pollutants from internal combustion engine exhaust gases, in which the exhaust gases are passed through a bed of charged pellets of material, preferably ferroelectric, having high dielectric constant (that is of the order of at least 1,000). In addition to removing particulates by oxidation, especially electric discharge assisted oxidation, there is disclosed the reduction of NOₓ gases to nitrogen, by the use of pellets adapted to catalyse the NOₓ reduction as exemplified by the use of barium titanate as the ferroelectric material for the pellets.

Also, US patents 3 983 021, 5 147 516 and 5 284 556 disclose the catalytic reduction of nitrogen oxides. However, US 3 983 021 is solely concerned with the reduction of NO to N in a silent glow discharge, the temperature of which is kept below a value at which the oxidation of N or NO to higher oxides of nitrogen does not occur. There is no mention of any simultaneous removal of hydrocarbons.

Although, so-called contact bodies are used in the process of US 3 983 021, and some of those disclosed may have some catalytic properties, catalysis does not appear to be a necessary feature of the process of US 3 983 021. Other surface properties, such as adsorption on large surface area materials, are the basis of the process of US 3 983 021.

US patent 5 147 516 does refer to the use of catalysts to remove NOₓ, but the catalytic materials involved are defined very specifically as being sulphur tolerant and deriving their catalytic activity from their form rather than their surface properties.

Also, the operating conditions are very tightly defined. There is no specific mention of the type, if any, of electric discharge involved. All that is disclosed is that the NOₓ removal depends upon electron-molecule interactions, facilitated by the structure of the 'corona-catalytic' materials not the inter-molecular interactions involved in the present invention. There is no mention of the simultaneous removal of hydrocarbons from the gas streams being treated by the invention of US 5 147 516.

US patent 5 284 556 does disclose the removal of hydrocarbons from internal combustion engine exhaust emissions. However, the process involved is purely one of dissociation in an electrical discharge of the so-called 'silent' type, that is to say, a discharge which occurs between two electrodes at least one of which is insulated. The device described is an open discharge chamber, not a packed bed device. Mention is made of the possible deposition of a NOₓ-reducing catalyst on one of the electrodes.

In a broader context, the precipitation of charged particulate matter by electrostatic forces also is known. However, in this case, precipitation usually takes place upon larger planar electrodes or metal screens.

It is an object of the present invention to provide an improved method for the removal of particulates and nitrogenous oxides from the exhaust gases emitted by internal combustion engines.

According to the present invention in one aspect there is provided a reactor for the plasma assisted treatment of the exhaust gas from an internal combustion engine to reduce the emission of pollutants therefrom, comprising a reactor chamber adapted to form part of an internal combustion engine exhaust system, the reactor chamber including at least two gas permeable electrodes between which there is disposed a gas permeable bed of active material and means for constraining exhaust gases to pass through the bed of active material via the gas permeable electrode, wherein the bed of active material includes zirconia in a form which does not absorb water vapour.

The zirconia may have a bimodal pore structure.

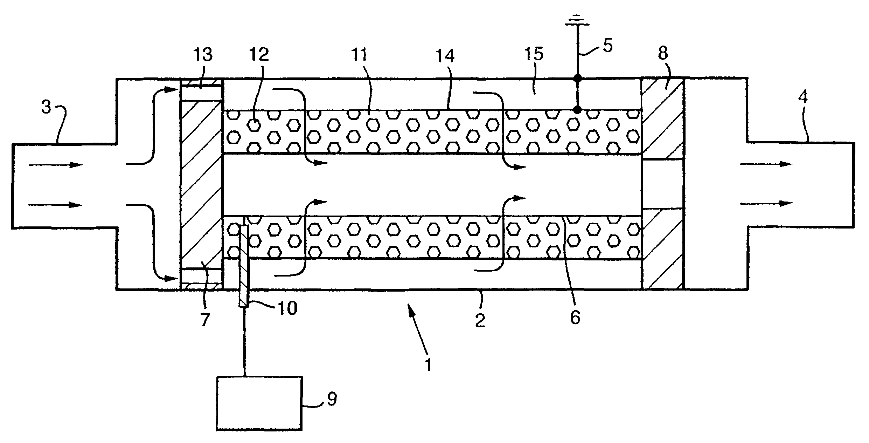

The invention will now be described, by way of example, with reference to the accompanying drawing which is a longitudinal section of a schematic plasma assisted reactor embodying the invention for the treatment of internal combustion engine exhaust gases.

Referring to the drawing, a reactor 1 for the treatment of internal combustion engine exhaust gases to reduce emissions of pollutants such as carbonaceous and nitrogenous combustion products therefrom consists of a stainless steel reactor chamber 2 which has an inlet stub 3 and an outlet stub 4, by means of which it can be connected into the exhaust system of an internal combustion engine (not shown). The chamber 2 is arranged in use to be connected to an earthing point 5. Within the chamber 2 are a cylindrical inner electrode 6 made of perforated stainless steel sheet and an earthed outer electrode 14 co-axial with the inner electrode 6 and also made of perforated stainless steel sheet. The electrodes 6 and 14 are held in position by two insulating supports 7 and 8. The space 11 between the electrodes 6 and 14 and the supports 7 and 8 is filled with a bed of pellets illustrated highly diagrammatically at 12 made of zirconia or a mixture of zirconia and titania, as discussed further below. The upstream electrode support 7 has a number of regularly spaced axially-oriented holes 13 around its periphery so that exhaust gases entering the reactor 1 pass into the space 15 between the outer electrode 14 and the wall of the chamber 2 before passing radially through the bed of pellets 12 and leaving the reactor 1 via the inner electrode 6, as shown in the drawing. An insulated feed-through 10 connects output from a source 9 of electrical potential to the inner electrode 6. The potential thus applied across the bed of pellets 12 is sufficient to excite a plasma within the interstices between the pellets 12. A convenient potential for this purpose is about 10 kV to 30 kV, and may be a pulsed direct or continuously varying alternating potential, or may be an interrupted continuous direct potential. Typically we employ a potential of 20 kV per 30 mm of bed depth.

Zirconia as an active material in the gas permeable bed is expected to have a catalytic effect in addition to promoting the establishing of a plasma in the exhaust gases passing through the reactor 2, but in a number of forms has shown poor performance in the treatment of exhaust gases from internal combustion engines. We have now found improved performance is achieved by using a form of zirconia manufactured by Norton Chemical Process Products Corporation and marketed under their product code XZ 16052. In pellet form this macerial has a nominal surface area of 95 m²g⁻¹, a pore volume of 0.31 cm³g⁻¹ and a density of 1.17 g cm⁻³ . This form of zirconia has the property that it does not adsorb water from the vapour phase. It also has a bimodal pore structure with the respective pore diameters centred around 40 nm and 8 nm.

Further, we have found that when pellets of zirconia in this form are mixed in the gas permeable bed with pellets of anatase titania there is a symbiotic improvement in performance in the treatment of internal combustion engine exhaust gases as compared with the performance of the zirconia or anatase titania on their own. It is convenient for this purpose to provide equal parts by volume of titania and zirconia in the mixture.

As an example of the use of the invention to reduce the emissions of nitrogenous and particulate carbonaceous combustion products from internal combustion engines, the exhaust gases from a diesel generator set were passed through a reactor similar to that described above, in which the bed of active material (12) comprised pellets of zirconia as described above. The concentraitons of nitrogenous oxides (NOₓ) at the inlet and outlets 3 and 4 respectively, of the reactor 2 were measured. The difference between the two values was taken as a measure of the ability of the reactor 2 to remove NOₓ from the exhaust gases. Similarly, the inlet and outlet concentrations of carbon monoxide were measured for the same reactor and operating conditions. An increase in the difference between the two concentrations of carbon monoxide was taken as an indication of the removal of particulate carbonaceous combustion products in the exhaust by oxidation to carbon monoxide.

The experiment was repeated for different values of the potential difference applied across the bed of active material 12. The results are tabulated below:

| Electric potential across reactor bed (Kv) | NOₓ reduction (ppm) | CO production (ppm) |
|---|---|---|
| 0.0 | 68 | 5 |
| 5.5 | 64 | 8 |
| 6.6 | 67 | 13 |
| 7.7 | 80 | 13 |
| 10.2 | 93 | 14 |
| 11.6 | 97 | 16 |
| 13.3 | 108 | 15 |
| 15.2 | 123 | 50 |
| 17.1 | 121 | 59 |
| 18.0 | 119 | 77 |
| 21.0 | 99 | 107 |

## Claims

1. A reactor for the plasma assisted treatment of the exhaust gases from an internal combustion engine to reduce the emission of pollutants therefrom, comprising a reactor chamber (2) adapted to form part of an internal combustion engine exhaust system, the reactor chamber (2) including at least two gas permeable electrodes (6, 14) between which there is disposed a gas permeable bed of active material (12) and means (6, 7, 13, 14) for constraining exhaust gases to pass through the bed of active material via the gas permeable electrodes (12), wherein the bed of active material (12) includes zirconia in a form which does not absorb water vapour.

2. A reactor according to claim 1 **characterised in that** the active material (12) comprises zirconia in a form which is porous with a bimodal pore structure.

3. A reactor according to claim 1 or claim 2 **characterised in that** the bed of active material (12) includes titania.

4. A reactor according to claim 3 **characterised in that** the bed of active material (12) is a mixture of equal parts by volume of zirconia and titania.

5. A reactor according to claim 3 or claim 4 **characterised in that** the titania is in the anatase phase.

6. A reactor according to claim 3 or claim 4 **characterised in that** the titania is textured rutile phase titania.

7. A reactor according to claim 3 or claim 4 **characterised in that** the titania is in the form of a mixture of anatase and textured rutile phase titania.

8. A reactor according to any preceding claim **characterised in that** the zirconia is that manufactured by the Norton Chemical Process Products Corporation and marketed under their product code XZ 16052.

## Patentansprüche

1. Reaktor für die plasmaunterstützte Behandlung der Abgase von einer Brennkraftmaschine zum Verringern der Emission von Schadstoffen daraus, der eine Reaktorkammer (2) aufweist, die angepasst ist, einen Teil von einem Abgassystem einer Brennkraftmaschine zu bilden, wobei die Reaktorkammer (2) zumindest zwei gasdurchlässige Elektroden (6, 14) hat, zwischen denen ein gasdurchlässiges Bett von aktivem Material (12) und eine Einrichtung (6, 7, 13, 14) angeordnet sind, um die Abgase zu zwingen, das Bett von aktivem Material über die gasdurchlässigen Elektroden (12) zu durchlaufen, wobei das Bett von aktivem Material (12) Zirkonoxid in einer Form hat, die Wasserdampf nicht absorbiert.

2. Reaktor nach Anspruch 1, **dadurch gekennzeichnet, dass** das aktive Material (12) Zirkonoxid in einer Form enthält, die porös ist mit einer bimodalen Porenstruktur.

3. Reaktor nach Anspruch 1 oder Anspruch 2, **dadurch gekennzeichnet, dass** das Bett von aktivem Material (12) ein Titanoxid hat.

4. Reaktor nach Anspruch 3, **dadurch gekennzeichnet, dass** das Bett von aktivem Material (12) ein Gemisch von gleichen Volumenteilen von Zirkonoxid und Titanoxid ist.

5. Reaktor nach Anspruch 3 oder Anspruch 4, **dadurch gekennzeichnet, dass** das Titanoxid in der Anatasphase ist.

6. Reaktor nach Anspruch 3 oder Anspruch 4, **dadurch gekennzeichnet, dass** das Titanoxid ein texturiertes Rutilphasentitanoxid ist.

7. Reaktor nach Anspruch 3 oder Anspruch 4, **dadurch gekennzeichnet, dass** das Titanoxid in der Form von einem Gemisch von Titanoxid aus Anatas und dem texturierten Rutilphasentitanoxid ist.

8. Reaktor nach einem der vorstehenden Ansprüche, **dadurch gekennzeichnet, dass** das Zirkonoxid durch die Norton Chemical Process Products Corporation hergestellt wird und unter seinem Produktkode XZ 16052 vertrieben wird.

## Revendications

1. Réacteur pour le traitement assisté au plasma des gaz d'échappement provenant d'un moteur à combustion interne pour réduire l'émission de polluants provenant de ceux-ci, comportant une chambre de réacteur (2) adaptée pour former une partie d'un système d'échappement de moteur à combustion interne, la chambre de réacteur (2) comportant au moins deux électrodes (6, 14) perméables aux gaz entre lesquelles est disposé un lit (12) perméable aux gaz de matériau actif et des moyens (6, 7, 13, 14) pour contraindre les gaz d'échappement à passer à travers le lit de matériau actif via les électrodes perméables aux gaz (6, 14), dans lequel le lit de matériau actif (12) comporte de l'oxyde de zirconium sous une forme qui n'absorbe pas la vapeur d'eau.

2. Réacteur selon la revendication 1 **caractérisé en ce que** le matériau actif (12) est constitué d'oxyde de zircone dans une forme qui est poreuse avec une structure de pore bimodale.

3. Réacteur selon la revendication 1 ou la revendication 2, **caractérisé en ce que** le lit de matériau actif (12) inclut de l'oxyde de titane.

4. Réacteur selon la revendication 3, **caractérisé en ce que** le lit de matériau actif (12) est un mélange à parts égales en volume d'oxyde de zircone et d'oxyde de titane.

5. Réacteur selon la revendication 3 ou la revendication 4, **caractérisé en ce que** l'oxyde de titane est dans la phase anatase.

6. Réacteur selon la revendication 3 ou la revendication 4, **caractérisé en ce que** l'oxyde de titane est de l'oxyde de titane en phase rutile texturée.

7. Réacteur selon la revendication 3 ou la revendication 4, **caractérisé en ce que** l'oxyde de titane a la forme d'un mélange anatase et d'oxyde de titane en phase rutile texturée.

8. Réacteur selon l'une quelconque des revendications précédentes, **caractérisé en ce que** l'oxyde de zircone est celui fabriqué par Norton Chemical Process Products Corporation et commercialisé sous son code de produit XZ 16052.
